# EUROPÄISCHE PATENTANMELDUNG

(11) **EP 0 751 092 A2**
(43) Veröffentlichungstag der Anmeldung: **02.01.1997**
(21) Anmeldenummer: 96250136.7
(22) Anmeldetag: 24.06.1996
(51) Int. Cl.: B66C 1/42

(54) **Vorrichtung zum Greifen und gewichtsabhängigen Klemmen von relativ zu einer Ortslage zu bewegenden oder zu haltenden Schienenführungen o.dgl.**

(30) Priorität: 28.06.1995 DE 19525018
(71) Anmelder: MANNESMANN Aktiengesellschaft, 40213 Düsseldorf (DE)
(72) Erfinder: Nerger, Klaus Klemens, 47506 Neukirchen-Vluyn (DE); Saeftel, Josef, 44575 Gastrop-Rauxel (DE)
(74) Vertreter: Presting, Hans-Joachim, Dipl.-Ing.

(57) **Zusammenfassung**

Die Erfindung betrifft eine Vorrichtung zum Greifen und gewichtsabhängigen Klemmen von relativ zu einer Ortslage zu bewegenden Teilen, z.B. Werkstücken, insbesondere in Verbindung mit einem handgeführten Handhabungsgerät, das einen Steuerschalter aufweist, wobei senkreicht angeordnete, parallel zueinander bewegbare Greifelemente an Stäben von Hebelpaaren mit übereinander angeordneten Gelenkbolzen befestigt sind und mittig zwischen den Stäben Steuermittel angeordnet sind.
Erfindungsgemäß ist vorgesehen, daß ein Tragrahmen (8) vorgesehen ist, an dem obere Paare von Gelenkbolzen (5a, 5b) für jeweils übereinanderliegende Paare von parallel zueinander schwenkbaren Stäben (4) angelenkt sind, die mittels Paaren von unteren Gelenkbolzen (6a, 6b) an einem Anschlußstück (7) für austauschbare Greifelemente (7a) angelenkt sind und daß ein Paar an je einem unteren Gelenkbolzen (6a, 6b) angelenkter Streben (10) an einem mittig zwischen den Stäben (4) in einer senkrechten Langlochführung (8a) im Tragrahmen (8) bewegbaren Steuerbolzen (9) gemeinsamt gelenkig befestigt ist.

## Beschreibung

Die Erfindung betrifft eine Vorrichtung zum Greifen und gewichtsabhängigen Klemmen von relativ zu einer Ortslage zu bewegenden Teilen, z. B. Werkstücken, insbesondere in Verbindung mit einem handgeführten Handhabungsgerät, das einen Steuerschalter aufweist, wobei senkrecht angeordnete, parallel zueinander bewegbare Greifelemente an Stäben von Hebelpaaren mit übereinander angeordneten Gelenkbolzen befestigt sind und mittig zwischen den Stäben Steuermittel angeordnet sind.

Eine Vorrichtung der eingangs genannten Art ist aus der DE-OS 1 756 613 bekannt; diese Vorrichtung weist senkrecht angeordnete Greifelemente auf, die über ein mehrgliedriges Scherengitter parallel zueinander bewegbar sind, wobei das Scherengitter aus Hebel bildenden Stäben besteht, die mittels übereinander angeordneter Gelenkbolzen miteinander verbunden sind. Mittig zwischen den Stäben ist ein spezieller Schaltmechanismus angeordnet, der die selbsttätige Aufnahme und Ablage einer Last ermöglicht, wobei mit jedem Schaltvorgang das Schließen des Greifers abwechselnd freigegeben oder gesperrt wird.

Ferner ist aus der DE-AS 22 64 772 eine Vorrichtung zum Greifen und Hochziehen von Fassadenelementen u. dgl. bekannt, das Greifelemente aufweist, die parallel zu einander geführt werden, unter Beibehaltung ihrer senkrechten Lage. Dazu sind Hebelpaare bildende Stäbe an den Enden jeweils an übereinander angeordneten Gelenkbolzen befestigt, so daß die Stäbe jeweils ein Gelenkparallelogramm bilden.

Auch aus der DE-GBM G 91 03 520.1 ist eine Vorrichtung mit Greifelementen bekannt. Die Greifelemente bestehen dort aus halbrundgebogenen Greifarmen mit einem Kniehebelsystem sowie mittig zwischen den Stäben angeordneten Schaltplatten zur Bewegungssteuerung der Greifarme. Allerdings ist die bekannte Vorrichtung als Schrittschaltvorrichtung ausgebildet, um mit zwischenzeitlichem Absetzen der Last eine Schaltstange in einer Steuerkurve zu bewegen und damit ein Öffnen, Schließen, Offenhalten oder Geschlossenhalten der Greifarme zu bewirken. Das Offenhalten kann nur in einer bestimmten Stellung der Greifarme und in einem festgelegten Zyklus erfolgen.

Speziell ausgebildete Greifelemente, die insbesondere an die zu bewegenden oder zu haltenden Werkstücke oder Teile spezifisch angepaßt worden sind, zeigt beispielsweise die GB 21 89 218 A.

Für das Greifen von Scheiben ist es bekannt, die erforderlichen Lasthaken von einer Seite unter das senkrecht stehende Werkstück, z. B. eine kreisrunde Scheibe, zu schieben. Beim Anheben des Lasthakens legt sich das Werkstück auf zwei Zapfen am Lasthaken. Derartige Lasthaken eignen sich aber nur schlecht, wenn auch verschieden große Scheiben damit gegriffen werden sollen oder wenn die Scheiben in Werkzeugmaschinen in zwei Aufspannungen bearbeitet werden müssen. Beim Entnehmen einer Scheibe mit einem solchen Lasthaken nach einer ersten

Aufspannung muß das Werkstück nämlich erst abgelegt und von der anderen Seite neu aufgenommen werden, weil der Lasthaken immer eine Werkstückseite verdeckt. Erst später kann das Werkstück nach dem Wenden in der Werkzeugmaschine neu gespannt werden.

Bei der Verwendung von herkömmlichen, durch die Last selbsttätig schließenden Greifzangen ergeben sich folgende Problempunkte: Die Bauhöhe der belasteten und auch unbelasteten Greifzangen ist sehr groß. Diese große Bauhöhe behindert das Bedienen eines oberhalb der Greifzange angeordneten Steuerschalters beim Überfahren von Hindernissen. Es verringert die mögliche Stapelhöhe im Vergleich zu einer sehr flachbauenden Greifzange. Sodann haben die Greifelemente herkömmlicher Greifzangen bei Belastung stets das Bestreben, weiter zu schließen bis hin zu einer Maximalstellung. Für den Fall, daß diese Stellung aber aufgrund der Werkstückgeometrie nicht eingenommen werden kann, entsteht bei nicht formstabilen Werkstücken eine zusätzliche starke Zwängung. Bei Kunststoffbehältern führt diese Zwängung schnell zur Beschädigung der Griffstellen. Weiterhin ist nachteilig, daß im Behälter beweglich angeordnete Lasten zum Kippen und damit zum Herausfallen des Behälters neigen. Weiterhin überragen viele innengreifende Greifzangen auch den Behälterrand, so daß diese Behälter nicht dicht an dicht gestapelt werden können. Schließlich ist nachteilig, daß den bekannten Greifelementen geeignete Zentrierelemente fehlen, die ein schnelles Aufsetzen der Greifzange auf den Behälter ermöglichen oder die verhindern, daß beim schrägen Abheben der Greifzange vom Behälter die Greiforgane am Behälter hängenbleiben.

Der vorliegenden Erfindung liegt daher die Aufgabe zugrunde, unter Beseitigung der aufgezeigten Nachteile die Vorrichtung zum Greifen und gewichtsabhängigen Klemmen derart zu gestalten, daß auch verschieden große Werkstücke bei seitlich geringem Freiraum zwischen zwei Aufspannungen nicht abgelegt und neu aufgenommen werden müssen und dabei eine kompakte Vorrichtung zu schaffen, die die Anpassung der Greifelemente an unterschiedlichste Werkstück-Formen und Werkstück-Arten erlauben. Hierbei soll eine Fixierbarkeit der Greifarme über den gesamten Hubbereich zur Vermeidung von Verletzungen beim Manipulieren der Greifarme von Hand gegeben sein.

Die gestellte Aufgabe wird aufgrund der eingangs bezeichneten Vorrichtung erfindungsgemäß dadurch gelöst, daß ein Tragrahmen vorgesehen ist, an dem obere Paare von Gelenkbolzen für jeweils übereinanderliegende Paare von parallel zueinander schwenkbaren Stäben angelenkt sind, die mittels Paaren von unteren Gelenkbolzen an einem Anschlußstück für austauschbare Greifelemente angelenkt sind und daß
ein Paar an je einem unteren Gelenkbolzen angelenkter Streben an einem mittig zwischen den Stäben in einer senkrechten Langlochführung im Tragrahmen bewegbaren Steuerbolzen gemeinsam gelenkig befestigt ist. Ein solches Grundmodul ermöglicht die Verwendung von außen- und innengreifenden Greiforganen für die unterschiedlichsten Werkstück-Formen und Werkstück-Arten. Damit kann eine Anpassung der Vorrichtung an bestimmte Fördergüter erfolgen. Besondere Vorzüge des Grundmoduls bestehen weiterhin in einem sehr hohen Maß an Arbeitssicherheit, einem großen Bedienkomfort und einer kompakten Bauweise bei relativ großem Hub. Die Vorrichtung kann immer durch Aufsetzen auf ein Fördergut geöffnet werden und beim Entfernen von einem abgelegten Werkstück in beliebigen Stellungen durch Betätigen eines Bedienungselementes offengehalten werden. Damit entfällt auch eine wesentliche Verletzungsgefahr, die beim Hantieren mit bekannten Scherenzangen besteht. Übliche Scherenzangen rasten nämlich nur in ganz geöffneter Stellung ein und müssen teilweise sogar beim Öffnen einer zugefallenen Greifzange oder zum Offenhalten in einer Zwischenstellung von Hand an den Greifzangen manipuliert werden. Die im Vergleich zu bekannten Scherenzangen geringe Bauhöhe der erfindungsgemäßen Vorrichtung und die kleinen seitlichen Abmessungen verringern das Totmaß des Handhabungsgerätes, erleichtern ferner das Bedienen des Steuerschalters beim Überfahren von Hindernissen und ermöglichen das Hantieren bei beengten Platzverhältnissen im Maschinenfreiraum in Behältern und bei dicht gestapeltem Fördergut.

Nach weiteren Merkmalen ist vorgesehen, daß außerhalb des Tragrahmens ein Schnellwechsel-Mechanismus mit einem Kupplungszapfen vorgesehen ist, der in eine Aufnahme eines Steuerschalters einkuppelbar ist. Ein derartiger Schnellwechsel-Mechanismus besitzt den Vorteil, eine Verbindung mit einem handgeführten Handhabungsgerät zu schaffen, das einen Steuerschalter aufweist, so daß die Vorrichtung zum Greifen gesteuert geführt und betätigt werden kann.

In Ausgestaltung der Erfindung ist vorgesehen, daß an dem Tragrahmen ein Handgriff mit einem Bedienhebel zur Betätigung eines Verriegelungsmechanismus befestigt ist.

Eine andere Verbesserung der Erfindung sieht vor, daß durch die Länge und Lage der Langlochführung der Abstand der Greifelemente zueinander in ihren Endstellungen festlegbar ist. Die Differenz zwischen maximalem und minimalem Abstand der Greifelemente zueinander ist der Hub der Greifvorrichtung. Der halbe Hub ist der Hub pro Greifelement. Beim Durchfahren des Hubes bleibt die Stellung der Greifelemente immer parallel zueinander.

In Weiterbildung der Erfindung ist vorgesehen, daß die mittig zwischen den Stäben angeordneten Steuermittel aus dem Verriegelungsmechanismus für die Greifelemente bestehen. Die Erfindung benutzt daher im Gegensatz zum Stand der Technik nicht eine Schrittschaltvorrichtung, sondern einen Verriegelungsmechanismus.

Ein Vorteil der Erfindung besteht ferner darin, daß der Steuerbolzen mittels des Verriegelungsmechanismus' in einer Vielzahl von Positionen feststellbar ist. Hierzu kann ein geeigneter Klemmechanismus blockieren oder in einem sehr feinen Raster formschlüssig verriegelt werden.

Im einzelnen sieht die Erfindung sodann vor, daß der Steuerbolzen derart mit einem Klotz verbunden ist, daß eine geringe Bewegung des Klotzes quer zur Langlochführung ermöglicht wird, wobei der Klotz auf der gegenüber einer am Tragrahmen angebrachten Stange liegenden Seite mit einer kleinteiligen Verzahnung in Richtung der Langlochführung versehen ist und daß zu dieser Verzahnung parallel verlaufend eine gleiche Verzahnung an einer am Tragrahmen angebrachten Stange vorgesehen ist. Die Vielzahl der Positionen des Verriegelungsmechanismus' kann daher durch die Anzahl der Zähne der Verzahnung beeinflußt werden.

Andere Merkmale der Erfindung bestehen darin, daß der Klotz für die Aufnahme des Steuerbolzens senkrecht bzw. quer zum Verlauf der Langlochführung selbst eine Langlochführung bildet. Der Verschiebeweg des Klotzes auf dem Steuerbolzen ist sodann geringfügig größer als die Überdeckung der Zähne, um ein Ein- oder Ausrasten zu ermöglichen.

Weiterhin ist vorgesehen, daß in dem Klotz quer zum Verlauf der Langlochführung paarweise gefederte Druckbolzen angeordnet sind, um den Klotz aus den Verzahnungen auszukuppeln.

Vorteilhaft ist weiterhin, daß parallel zum Verlauf der Verzahnung eine ebene Gleitfläche an der Stange angeordnet ist. Die Gleitfläche stellt eine Führung dar.

In weiterer Ausgestaltung ist vorgesehen, daß ein sattelartiges Teil schräg nach oben verschiebbar auf dem Tragrahmen angeordnet ist und mit einem Schenkel verbunden ist, in dem schräg nach oben verlaufende Langlöcher eingearbeitet sind, durch die Führungsbolzen verlaufen, die im Tragrahmen befestigt sind. Die Schräglage dieser Langlöcher bewirkt, daß beim Abheben des sattelartigen Teils vom Tragrahmen der Schenkel den verzahnten Klotz gegen die Kraft der federnden Druckbolzen unabhängig von der Stellung des Steuerbolzens mit der Verzahnstange in Eingriff bringt.

Nach anderen Merkmalen wird vorgeschlagen, daß das sattelartige Teil und die Schenke mittels paarweise angeordneten Zugfedern bei nicht vorhandener Lasteinwirkung den Steuerbolzen entriegeln. Die Zugfedern erfüllen dabei die Aufgabe, daß das sattelartige Teil bei unbelasteter Vorrichtung stets in die Stellung gezogen wird, in der der Steuerbolzen nicht verriegelt ist.

Eine andere Maßnahme sieht vor, daß der Weg des sattelartigen Teils mittels Tragschrauben begrenzt ist. Solche verdrehgesicherten Tragschrauben stellen den Verschiebeweg und die Kraftübertragung vom Tragrahmen über das sattelartige Teil auf den Kupplungszapfen zum Handhabungsgerät dar.

Nach einer anderen Maßnahme ist vorgesehen, daß der Verriegelungsmechanismus mittels eines Handgriffs und eines Bedienhebels von Hand betätigbar ist, in der Art, daß der Bedienhebel schwenkbar um eine Drehachse am Tragrahmen gelagert ist und einen Mitnehmerzapfen aufweist, der über ein Langloch eines ebenfalls am Tragrahmen verschiebbar gelagerten Schiebers über schräg nach oben verlaufende Langlöcher geführt ist. Diese Maßnahme trägt dazu bei, die Vorrichtung mit einer Hand zu bedienen , zu steuern und dabei den Verriegelungsmechanismus bei Bedarf nicht nur durch eine Last sondern auch von Hand zu betätigen.

Die erforderlichen Funktionen werden dadurch erzielt, daß der Schieber mittels der Bolzen gegenüber dem Tragrahmen verschiebbar geführt ist.

Um zu verhindern, daß die Vorrichtung bei unbeabsichtigtem Anstoßen der Last oder Aufsetzen der Vorrichtung beim Transport öffnet, ist vorgesehen, daß am sattelartigen Teil eine Blattfeder befestigt ist, die mit einem Absatz an dem Bedienhebel anliegt.

Eine Sicherung einer eingestellten Position wird dadurch erzielt, daß ein äußerer Hebelarm des Bedienhebels mittels einer gefederten Kugel an der Stange arretierbar ist.

Ein Ertassen der Werkstücke erfolgt je nach Werkstückart vorteilhafterweise dadurch, daß die Greifelemente entweder mit einem starren Greifprisma oder mit einem selbsteinstellenden Greifprisma versehen sind.

Eine diesbezügliche Ausführungsform bewährt sich deshalb hervorragend, weil das selbsteinstellende Greifprisma einen Außenteil aufweist mit einer am Ende befestigten Lastauflage und einem etwa gegenüberliegenden Niederhalter mit einer Halterung, wobei die Halterung verschiebbar an den Stäben geführt ist und den Niederhalter jeweils mittels Zapfen in Bohrungen aufnimmt. Die Kontaktfläche kann dabei so geformt sein, daß der Niederhalter über den ganzen Hub an das jeweils gegriffene Werkstück angepaßt ist.

Ferner ist vorgesehen, daß ein Außenteil einen Gleitfuß aufweist, der mit einem Antirutsch-Belag versehen ist und mit einer separaten Schulter zum schnellen Öffnen beim Absenken. Daraus resultiert ein großer Vorzug des Gleitfußes, daß nämlich auch relativ eng beieinander gestapelte Werkstücke ohne vorheriges Vereinzeln von Hand gegriffen werden können.

Die Tragfähigkeit der Vorrichtung kann sodann dadurch gesteigert werden, daß ein Außenteil mit einer Zusatzlastauflage versehen ist, die einen gegen das jeweilige Werkstück gerichteten Auflagenvorsprung aufweist. Schwerere Werkstücke weisen häufig auch eine unsymmetrische Lastverteilung auf. Außerdem liegen in einigen Fällen starke Durchmessersprünge an den Werkstücken vor.

Für scheibenförmige Werkstücke ist es besonders vorteilhaft, daß ein Greifelement aus einem Greifarm besteht, an dem um einen Bolzen ein Spannprisma am Ende des Greifarms federnd rückschwenkbar gelagert ist.

Das Aufnehmen von speziellen Werkstücken, die entsprechend gestapelt oder beieinanderliegend angeordnet sind, stößt oft auf besondere Eigenarten. Für eine derartige Werkstück-Lage ist vorgesehen, daß die Greifelemente gegenüberliegend zu den Gelenkbolzen jeweils eine Zahnwellenprofilbohrung aufweisen, in denen jeweils eine Zahnwelle geführt ist und daß auf der Zahnwelle jeweils eine Stützbacke und/oder zumindest ein Lasthaken angeordnet sind. Stützbacke und Lasthaken sind dementsprechend leicht auswechselbar und können auch entsprechend geformt oder gestaltet sein.

In dieser Hinsicht ist außerdem vorteilhaft, daß die Greifelemente für dicht aneinanderliegende Werkstücke aus einem Lasthaken mit einem abgewinkelten Arm bestehen und auf der Zahnwelle schwenkbar gelagert sind, wobei Mittel für die Begrenzung der Schwenkbewegung und Mittel gegen eine Axialbewegung vorgesehen sind. Hierbei kann der abgewinkelte Arm z.B. auf dem Umfang einer Stützbacke aufgelegt sein und die Mittel für die Begrenzung der Schwenkbewegung können aus Stiften u.dgl. bestehen.

Der Hub des sog. Grundmoduls kann auch eingeschränkt genutzt werden. Hierzu ist vorgesehen, daß die Greifelemente aus zueinander in einer Ebene verstellbaren Greifleisten bestehen, die beide über Gelenkbolzen mit den Anschlußstücken verbunden sind und einen Zentrierrahmen aufnehmen. In dieser Form eignet sich die Vorrichtung insbesondere für Behälter mit Griffbereichen, in die die Vorrichtung eingreift.

Um ein gleichmäßiges Erfassen derartiger Werkstücke, die aus Behältern bestehen, zu gewährleisten, wird vorgeschlagen, daß an den Endbereichen des Zentrierrahmens jeweils Zentrierhebel schwenkbar gelagert und gegen axiales Verschieben gesichert sind.

Um einen universellen Einsatz der Vorrichtung zu erzielen und um die Vorrichtung auch in Form eines Klappfahrwerkes einsetzen zu können, wird vorgeschlagen, daß an den Anschlußstücken Rollenhalter mit drehgelagerten Laufrollen befestigt sind. Die Vorrichtung kann daher in Umkehrung ihrer Normallage im Bereich von Schienenführungen u.dgl. eingesetzt werden.

Ausführungsbeispiele sind in der Zeichnung dargestellt und werden im folgenden näher beschrieben. Es zeigen
- Fig. 1: eine Vorderansicht der Vorrichtung im Teilschnitt,
- Fig. 2: den Verriegelungsmechanismus in Vorderansicht,
- Fig. 3: den Verriegelungsmechanismus wie Fig. 2 in Ansicht in Verbindung mit dem Handgriff,
- Fig. 4: die Ansicht wie die Figuren 2 und 3 in Verbindung mit der Blattfeder
- Fig. 4a: die zu Fig. 4 gehörende Seitenansicht,
- Fig. 5: die Ansicht wie Fig.4 mit einer geänderten Stellung des Handhebels,
- Fig. 5a: die zu Fig. 5 gehörende Seitenansicht
- Fig. 6: ein rundes Werkstück mit einem starren Greifprisma in Vorderansicht,
- Fig. 7: die Greifelemente in Vorderansicht mit einem selbsteinstellenden Verstellprisma,
- Fig. 7a: die gleiche Ansicht wie Fig. 7 für ein Werkstück mit größerem Durchmesser,
- Fig. 8: eine Bauweise für schwere Werkstücke mit einer zweiten Lastauflage,
- Fig. 8a: eine Einzelheit eines Stützbackens mit Zahnwellenprofil,
- Fig. 8b: einen Querschnitt durch den Stützbacken als Einzelheit,
- Fig. 8c: eine alternative Ausführungsform für dicht gestapelte Werkstücke,
- Fig. 8d: eine Einzelheit mit einem Stellring,
- Fig. 8e: die Ausführungsform nach Fig. 8c in geschlossener Lage mit einem hochgeschwenkten Lasthaken, der vor der Zahnwelle und der Stützbacke vorbeischwenkt,
- Fig. 9: eine Vorderansicht auf eine gestufte Welle mit der Greifvorrichtung,
- Fig. 10: eine alternative Ausführungsform für scheibenförmige Werkstücke,
- Fig. 11: die zu Fig. 10 gehörende Seitenansicht,
- Fig. 12: eine alternative Ausführungsform zum Erfassen von Behältern in Vorderansicht,
- Fig. 13: die alternative Ausführungsform gemäß Fig. 12 mit weiteren Zusatzteilen,
- Fig. 14: die Ausführungsform gemäß Fig. 12 und 13 in einer Ansetzstellung und
- Fig. 15: eine Anwendung der Vorrichtung als Klappfahrwerk für Schienenführungen.

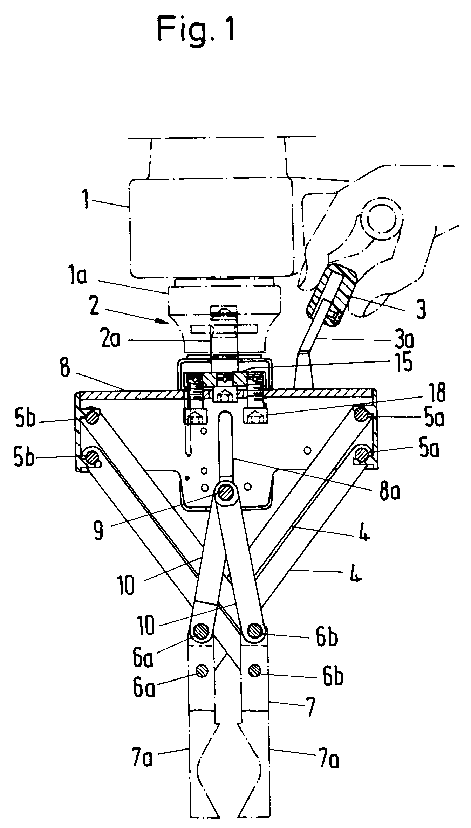

Die Vorrichtung zum Greifen und gewichtsabhängigen Klemmen von Werkstücken ist gemäß Fig. 1 in Verbindung mit einem handgeführten Handhabungsgerät gezeigt, das einen Steuerschalter 1 aufweist, der über einen Schnellwechselmechanismus 2 mit einem Kupplungszapfen 2a in einer Aufnahme 1a verbindbar ist. Der Steuerschalter 1 des Handhabungsgerätes kann dabei über eine starre Führung, eine Kette, ein Seil o.dgl. und Signalleitungen mit dem Handhabungsgerät verbunden sein. Die Vorrichtung kann aber auch direkt mit einem Tragsystem (Zugmittel) des Handhabungsgerätes verbunden sein, und der Steuerschalter 1 kann separat angeordnet sein.

Die in Fig. 1 gezeigte Anordnung ist deshalb vorteilhaft, weil das Bedienen des Handhabungsgerätes, das Bedienen der Vorrichtung und das Führen einer Last schnell und sicher mit einer Hand ausgeführt werden kann. Die andere Hand des Bedieners ist dabei frei, um andere Tätigkeiten auszuführen.

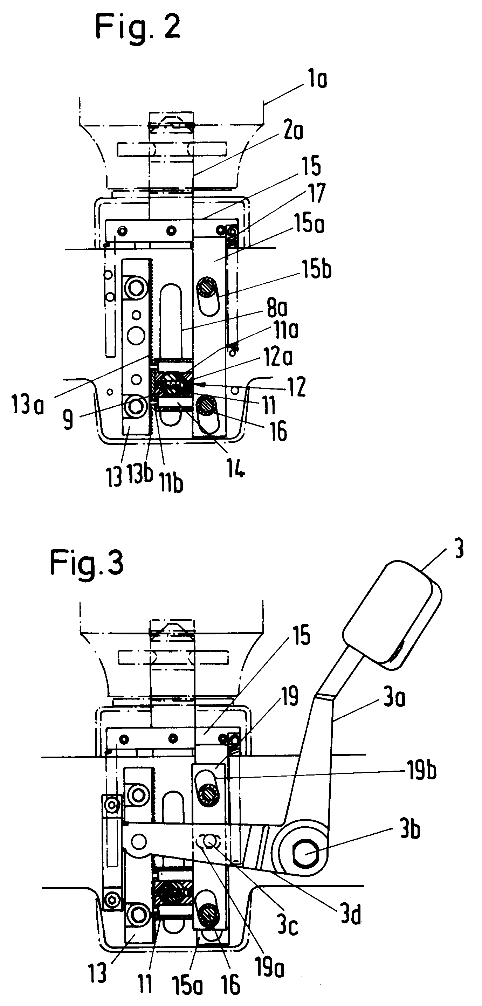

Zur Vorrichtung gehört ein Handgriff 3 als Bedienelement mit einem Bedienhebel 3a, der um eine Drehachse 3b (Fig. 3) schwenkbar ist.

Die Vorrichtung (Fig. 1 bis 5) bildet quasi das Grundmodul bestehend aus dem erwähnten Handgriff 3 als Bedienelement, einem Verriegelungsmechanismus 12 und einem Hebelsystem für beliebig montierbare und schnell austauschbare Greifelemente 7a.

Dieses sog. Grundmodul weist beieinanderliegende Paare von parallelveraufenden Stäben 4 auf, die mittels oberen Gelenkbolzenpaaren 5a, 5b an einem Tragrahmen 8 angelenkt sind. Die parallelverlaufenden Stäbe 4 sind mittels Paaren von unteren Gelenkbolzen 6a, 6b an einem Anschlußstück 7 für die erwähnten Greifelemente 7a lösbar angelenkt und ein Paar an je einem unteren Gelenkbolzen 6a bzw. 6b angelenkter Streben 10 sind an einem am Tragrahmen 8 mittig zwischen den Stäben 4 in einer Langlochführung 8a verstellbaren Steuerbolzen 9 gemeinsam gelenkig befestigt. Die unteren Gelenkbolzen 6a und 6b stellen dabei jeweils gewissermaßen eine Schnittstelle zwischen dem sog. Grundmodul und den Greifelementen 7a dar. Der Bewegungsweg des Steuerbolzens 9 bestimmt auch den jeweiligen Abstand der Greifelemente 7a, so daß durch die Länge und Lage der Langlochführung 8a der Abstand der Greifelemente 7a zueinander in ihren Endstellungen festlegbar ist.

Gemäß Fig. 1 befindet sich der Steuerbolzen 9 an seinem unteren Endanschlag, die Greifelemente 7a nehmen damit ebenfalls die tiefste Position ein und befinden sich deshalb auf ihrem minimalen Abstand zueinander. Demgegenüber begrenzt das obere Ende der Langlochführung 8a den maximalen Abstand der Greifelemente 7a. Dabei verringert sich auch der Abstand zwischen den Greifelementen 7a und dem Tragrahmen 8. Die Differenz zwischen dem maximalen und dem minimalen Abstand der Greifelemente 7a (bzw. der unteren Gelenkbolzen 6a und 6b) zueinander bildet den Hub der Vorrichtung. Pro Greifelement 7a entsteht dadurch der halbe Hub der Vorrichtung.

Beim Durchfahren dieses Hubes bleibt die Stellung der Greifelemente 7a immer parallel zueinander. Für den Fall, daß der Steuerbolzen 9 in der Langlochführung 8a in einer Zwischenlage blockiert sein sollte, sind damit auch die beiden Greifelemente 7a in einer bestimmten Lage fixiert. Eine universelle Verwendbarkeit der Vorrichtung ergibt sich aber dann, wenn die Greifelemente 7a nicht nur an einer bestimmten Stelle fixiert werden können, sondern an einer Vielzahl von Positionen, wobei der Steuerbolzen 9 mittels des Verriegelungsmechanismus' 12 in dieser Vielzahl von Positionen arretierbar ist.

Gemäß Fig. 2 ist der Verriegelungsmechanismus 12 näher dargestellt. Der Steuerbolzen 9 ragt hierzu in einen Klotz 11 mit einer querliegenden Langlochführung 11a hinein. Ein Stift 12a des Verriegelungsmechanismus' 12 verbindet den Klotz 11 dahingehend mit dem Steuerbolzen 9, daß der Klotz 11 zum Steuerbolzen 9 axial nicht verschoben werden kann, wohl aber gegenüber dem Steuerbolzen 9 quer zur Langlochführung 8a des Tragrahmens 8. Parallel zur Langlochführung 8a ist über den gesamten Verschiebeweg des Steuerbolzens 9 in der Langlochführung 8a am Tragrahmen 8 eine zum Klotz 11, der eine Verzahnung 11b trägt, gegenverzahnte Stange 13 angebracht. Diese Stange 13 ist so positioniert, daß bei Verschiebung des Klotzes 11 gegen die gegenverzahnte Stange 13 mit einer Verzahnung 13b die Zähne des Klotzes 11 mit der verzahnten Stange 13 in Eingriff kommen. Der Verschiebeweg des Klotzes 11 auf dem Steuerbolzen 9 ist geringfügig größer als die Überdeckung der Zähne. In dem verzahnten Klotz 11 sind zusätzlich federnde Druckbolzen 14 eingebracht, die den Klotz 11 von der verzahnten Stange 13 wegdrücken. Hierzu ist an der Stange 13 vor deren Verzahnung eine ebene Gleitfläche 13a angebracht. Das Ineingriffbringen der Verzahnungen 11b und 13b erfolgt über ein sattelartiges Teil 15, das verschiebbar auf dem Tragrahmen 8 angeordnet ist. Das sattelartige Teil 15 weist einen Schenkel 15a mit schräg angeordneten Langlöchern 15b auf. Die Langlöcher 15b führen das sattelartige Teil 15 über am Tragrahmen 8 fest angebrachte Bolzen 16. Die Schräglage der Langlöcher 15b bewirkt, daß beim Abheben des sattelartigen Teils 15 vom Tragrahmen 8 ein Schenke 15a den verzahnten Klotz 11 gegen die Kraft des federnden Druckbolzens 14 unabhängig von der Stellung des Steuerbolzens 9 mit der verzahnten Stange 13 in Eingriff bringt. Zugfedern 17 bewirken ferner, daß das sattelartige Teil 15 bei unbelasteter Vorrichtung stets in die Stellung gezogen wird, in der der Steuerbolzen 9 nicht verriegelt ist. Der Kupplungszapfen 2a ist, wie in Fig. 1 gezeigt, fest an der Oberseite des sattelartigen Teils 15 angebracht. Für den Fall, daß das sattelartige Teil 15 gegen die Kraft der Zugfedern 17 vom Tragrahmen 8 abgehoben wird, begrenzen verdrehgesicherte Tragschrauben 18 (Fig. 1) den Verschiebeweg und stellen die Kraftübertragung vom Tragrahmen 8 über das sattelartige Teil 15 auf den Kupplungszapfen 2a zum Handhabungsgerät bzw. zu dessen Steuerschalter 1 her. Die Kräfteverhältnisse der parallelogrammförmig angeordneten Stäbe 4 sind so ausgelegt, daß die Vorrichtung auch ohne einen Verriegelungsmechanismus 12 bei Verwendung von prismatischen Greifelementen 7a noch selbstschließend wirkt. Eine zentrisch an den Greifelementen 7a wirkende Gewichtskraft des Fördergutes bewirkt ein Schließen der Vorrichtung. Außerhalb des Schwerpunktes gegriffene Lasten, z.B. Wellen, wirken beginnend mit einer bestimmten Unsymmetrie aufhebelnd auf die Vorrichtung. Damit die Vorrichtung auch dann nicht unbeabsichtigt öffnet, wird der Verriegelungsmechanismus 12 betätigt. Der Verriegelungsmechanismus 12 wird aber auch deshalb verwendet, um zu verhindern, daß die geöffnete Vorrichtung beim Entfernen von einer abgelegten Last nicht wieder schließt. In dieser Situation wird die Verriegelung über den Handgriff 3 und den Bedienhebel 3a betätigt.

Gemäß Fig. 3 ist der Bedienhebel 3a mittels einer Drehachse 3b schwenkbar am Tragrahmen 8 befestigt und besitzt einen Mitnehmerzapfen 3c an einem äußeren Hebelarm 3d. Der Mitnehmerzapfen 3c ragt in ein Langloch 19a eines Schiebers 19. Der Schieber 19 ist vergleichbar mit dem sattelartigen Teil 15 auf dem Bolzen 16 verschiebbar geführt. Hierzu besitzt der Schieber 19 ähnliche schräg angeordnete Langlöcher 19b wie der Schenkel 15a. Bei der in Fig. 3 gezeigten Stellung bringt der Schieber 19 den verzahnten Klotz 11 mit der gegenverzahnten Stange 13 in Eingriff und verhindert das Schließen der leeren Vorrichtung. Zum Lösen dieser Verriegelung wird der Handgriff 3 in Richtung des Steuerschalters 1 geschwenkt, damit der Schieber 19 in eine deckungsgleiche Lage mit dem Schenkel 15a gebracht wird. Dadurch gelangt der Klotz 11 wieder in die in Fig. 2 gezeigte Position, und die Vorrichtung befindet sich in entriegelter Stellung, die Greifelemente 7a fallen zu.

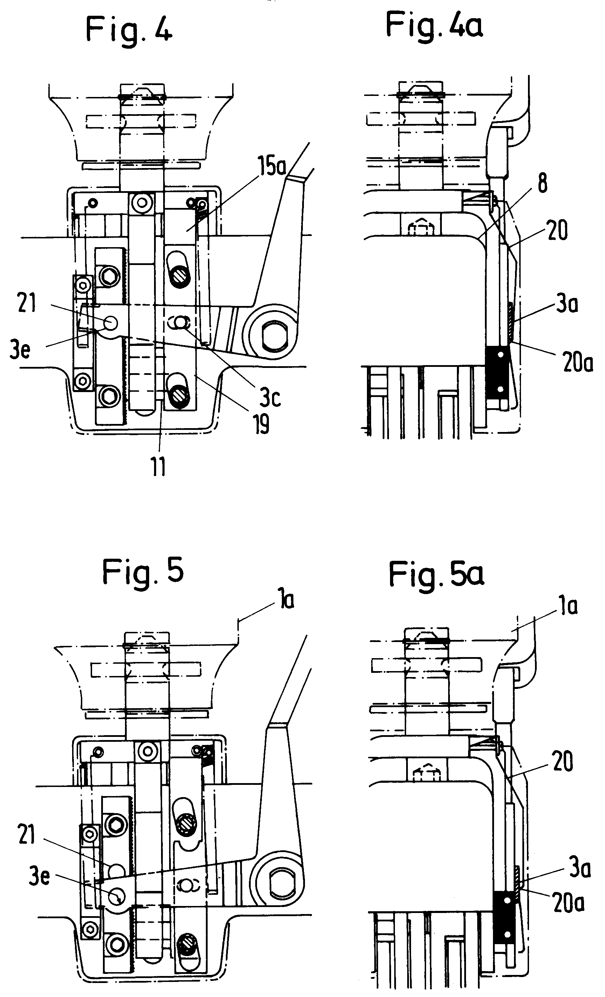

Eine weitere Funktion des Verriegelungsmechanismus' 12 besteht darin zu verhindern, daß bei unbeabsichtigtem Anstoßen der Last oder durch Aufsetzen der Vorrichtung beim Transport geöffnet wird. Diese Funktion ist in den Fig. 4, 4a, 5 und 5a gezeigt. Hierbei wird eine Blattfeder 20 mit einem Absatz 20a an dem sattelartigen Teil 15 befestigt. Dabei ragt der Absatz 20a unter den äußeren Hebelarm 3d. Für den Fall, daß das sattelartige Teil 15 bei Lastaufnahme der Vorrichtung wie in den Fig. 4 und 4a gezeigt wird, vom Tragrahmen 8 abgehoben wird, so schwenkt auch der Bedienhebel 3a über den Absatz 20a hoch. In dieser Position wird eine Kugel 21 durch eine dahinter angeordnete, nicht gezeichnete Feder in eine Bohrung 3e des äußeren Hebelarms 3d gedrückt und arretiert damit den äußeren Hebelarm 3d. In dieser Stellung wird der Klotz 11 sowohl durch den Schenkel 15a als auch durch den Schieber 19 gegen die gegenverzahnte Stange 13 gedrückt. Für den Fall, daß beim Hantieren mit der Vorrichtung das gegriffene Werkstück oder die Greifelemente 7a unbeabsichtigt auf ein Hindernis aufgesetzt werden, verschiebt sich das sattelartige Teil 15 wieder in die in Fig. 2 gezeigte Position. Die Blattfeder 20 wird dabei entsprechend nach unten verschoben, währenddem der Bedienhebel 3a jedoch in seiner Arretierung über der Kugel 21 verharrt. Dadurch kann die Vorrichtung nicht öffnen und das Werkstück kann nicht verlorengehen. Für den anderen Fall, daß es sich um ein beabsichtigtes Aufsetzen des Werkstückes handelt, kann der Bediener mit geringer Handkraft gegen den Widerstand der Arretierung den Handgriff 3 in Richtung des Steuerschalters 1 schwenken, um die Vorrichtung zu öffnen. Das Lösen der Arretierung des Bedienhebels 3a kann aber auch schon erfolgen, wenn die Last noch in der Vorrichtung hängt und die Zange noch nicht aufgesetzt wurde. Dieser Fall ist in Fig. 5 dargestellt. Die Vorrichtung öffnet dann erst bei einem nächsten Aufsetzen. Hierbei wird der Bedienhebel 3a gegen den Widerstand der Blattfeder 20 vom Absatz 20a nach unten geschwenkt. Ein solches Freigeben der Arretierung bei noch anhängender Last ermöglicht dem Bediener, die Vorrichtung ohne Zwischenstopp aufzusetzen und zu öffnen. Das Lösen der Vorrichtung bei noch anhängender Last kann aber auch durch Betätigung des Bedienhebels 3a jederzeit wieder rückgängig gemacht werden. Die Vorrichtung bleibt dann verriegelt, bis der Bediener bewußt bei anhängender oder aufgesetzter Last den Handgriff 3 betätigt. Jede Funktion der Vorrichtung ist unmittelbar verfügbar, ohne daß erst ein festgelegter Zyklus durchlaufen werden müßte.

In einigen Anwendungsfällen darf das Freigeben der Verriegelung bei noch anhängender Last aber nicht möglich sein. In diesen Fällen wird die Blattfeder 20 durch einen starren Mitnehmer ersetzt, der ähnlich wie der Absatz 20a unter den Bedienhebel 3a greift. Der Bedienhebel 3a kann aber dann bei abgehobenem sattelartigen Teil 15 nicht mehr betätigt werden.

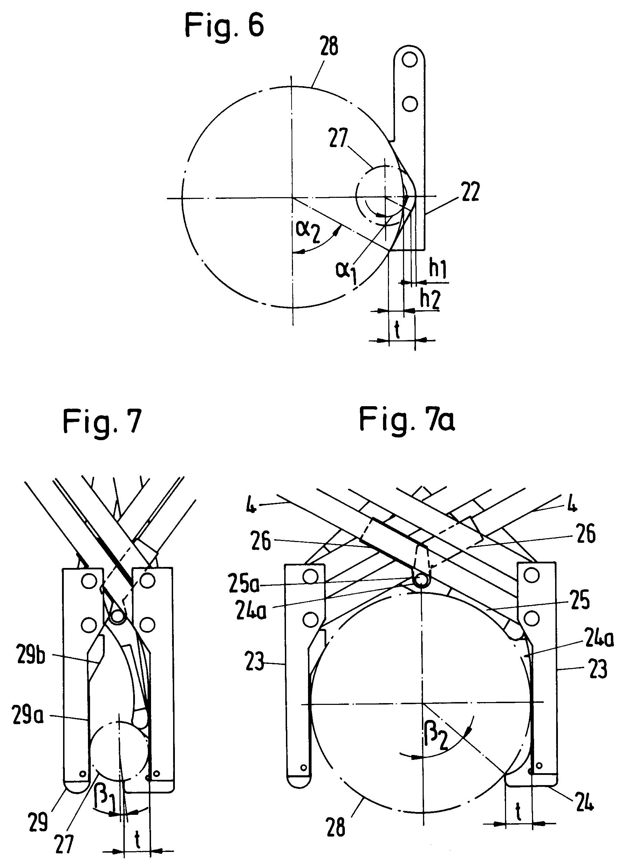

Die Greifelemente 7a sind an der Schnittstelle (untere Gelenkbolzen 6a, 6b) am sog. Grundmodul austauschbar. Die Ausführungsformen der Fig. 7 und 7a zeigen abweichend von dem in Fig. 6 dargestellten Greifelement 7a mit starrem Greifprisma 22 ein Greifelement mit selbsteinstellendem Verstellprisma. Zur besseren Vergleichbarkeit ist die mit dem Maß "t" bezeichnete Tiefe der Greifprismen 22 identisch. Gemäß Fig. 6 ist die wirksame Überdeckung "h1" und "h2" zwischen dem Greifprisma 22 und den angedeuteten Werkstücken 27 und 28 jedoch kleiner als "t". Der Gegenstand der Figuren 7 und 7a setzt als wirksame Überdeckung dagegen jeweils das Maß "t" gleich voraus. Aus diesem Grunde sind die Winkelabweichungen β 1 und β2 zwischen den Wirklinien der Gewichtskräfte der Werkstücke 27 und 28 und der Stützkräfte an dem Greifprisma 22 immer kleiner als die Winkelabweichungen α1 und α2 gemäß Fig. 6. Damit ergeben sich bei einem verstellbaren Greifprisma 22 bei gleichen Werkstückgewichten auch kleinere erforderliche Stützkräfte oder bei gleicher Belastbarkeit der Greifprismen 22 höhere zulässige Werkstückgewichte als bei den starren Greifprismen 22. Ein weiterer Vorzug beim selbsteinstellenden Greifprisma 22 besteht darin, daß die Greifelemente 7a für kleine Werkstücke nicht soweit unter dem Werkstück herausragen. Die Werkstücke 27,28 können damit auch bei geringerer Bodenfreiheit gehandhabt werden.

Das verstellbare Greifprisma 22 besteht aus einem Außenteil 23 der Lastauflage 24, einem Niederhalter 25 und aus Halterungen 26. Die Halterungen 26 sind verschiebbar an den Stäben 4 geführt und nehmen den Niederhalter 25 an Zapfen 25a in Bohrungen 26a schwenkbar auf. Zusätzlich ist der Niederhalter 25 an der Lastauflage 24 so geführt, daß er stets an einer Kontaktfläche 24a anliegt. Die Kontaktfläche 24a ist dabei so geformt, daß der Niederhalter 25 über den ganzen Hub dem Durchmesser eines Werkstückes 27,28, das an der Kontaktfläche 24a anliegt, angepaßt ist. Da das Grundmodul bei Lastaufnahme die Vorrichtung automatisch verriegelt, kann sich der Niederhalter 25 beim Kippen von Werkstücken 27,28 unmittelbar über die Zapfen 25a unter den Stäben 4 abstützen, ohne daß die Vorrichtung öffnet.

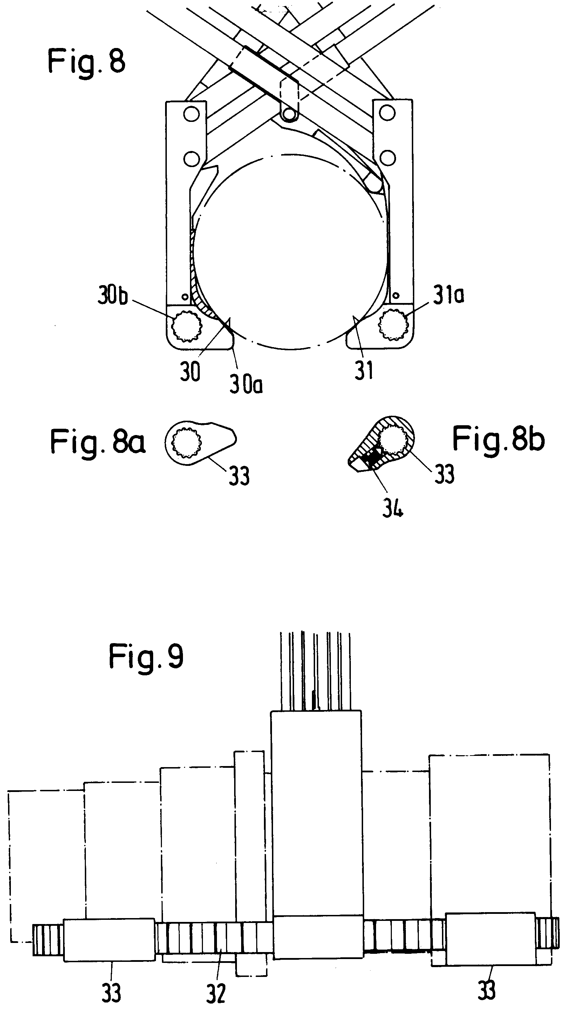

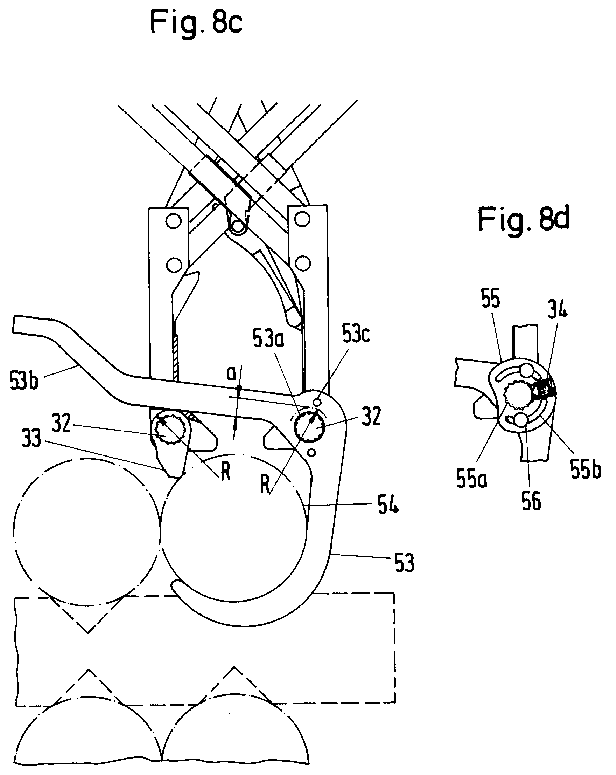

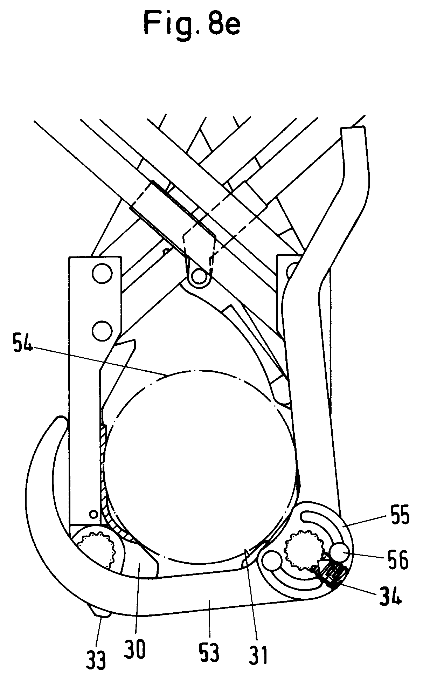

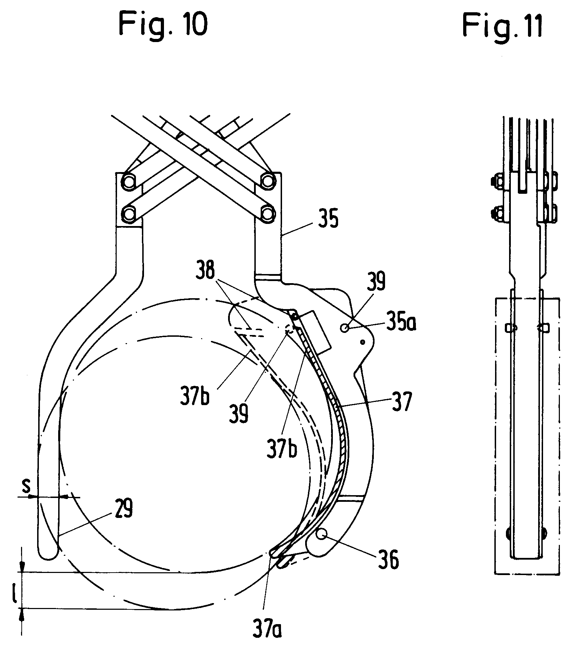

Zur sicheren Handhabung von Werkstücken 27,28 reicht es aus, wenn die Vorrichtung mit nur einem verstellbaren Greifprisma 22 ausgestattet ist. An der zweiten Seite wird das Außenteil 23 mit einem Gleitfuß 29 kombiniert. Der Gleitfuß 29 weist einen Antirutsch-Belag 29a gegen axiales Verschieben der Werkstücke 27,28 und eine Schulter 29b zum schnelleren Öffnen der Vorrichtung beim Absenken auf das Werkstück 27,28 auf. Bei großen Werkstückgewichten kann der Gleitfuß 29 jedoch auch, wie in Fig. 8 gezeigt ist, durch eine Zusatzlastauflage 30 ersetzt werden. Dadurch wird gegenüber der Ausführung mit einem Gleitfuß 29 eine Verdoppelung der zulässigen Traglast der Vorrichtung erreicht. Schwerere Werkstücke 27,28 weisen häufig auch eine unsymmetrische Lastverteilung auf. Es kommt zu erheblichen Durchmessersprüngen, wie solche in Fig. 9 dargestellt sind. Mit herkömmlichen Greifzangen können solche Werkstücke 27,28 oft nur sehr ungünstig gegriffen werden. Dieser Fall tritt insbesondere dann ein, wenn ein Wellen-Werkstück zum Einlegen in eine Werkzeugmaschine oder zur Vermeidung von axialem Verrutschen in der Vorrichtung möglichst waagerecht eingehängt werden muß. Aus diesem Grund weisen eine Lastauflage 31 und eine Zusatzlastauflage 30 jeweils Zahnwellenbohrungen 31a und 30b mit Zahnwellenprofil auf. Diese Zahnwellenbohrungen 31a und 30b dienen zur Aufnahme von entsprechenden Zahnwellen 32. Auf den freien Enden der Zahnwellen 32 können nach Bedarf zusätzliche Stützbacken 33 so positioniert werden, daß das unsymmetrisch aufliegende Werkstück 27,28 an den gewünschten Stellen abgestützt wird. Da diese abzustützenden Stellen eines Werkstückes 27,28 auch unterschiedliche Durchmesser aufweisen können, werden die Stützbacken 33 entsprechend der Zahnteilung versetzt gemäß Fig. 8a oder auch spiegelbildlich und versetzt entsprechend Fig. 8b auf die Zahnwellen 32 geschoben. Aufgrund der festen Zahnteilung kann auf bestimmte Durchmesserabstufungen eingestellt werden. Bei Verwendung der spiegelbildlichen Anordnung kann jeweils auf die sich ergebenden Zwischenstufen eingestellt werden. Somit werden die Stufensprünge insgesamt halbiert. Die Zahnwellen 32 sind aber auch je nach Bedarf durch beliebige werkstückspezifische Stützhebel austauschbar. Das Fixieren gegen axiales Verrutschen der Zahnwellen 32 in den Zahnwellenbohrungen 31a und 30b und auch das Fixieren der Stützbacken 33 auf den Zahnwellen 32 erfolgt mittels Klemmschrauben 34 gemäß Fig. 8b.

Eine weitere Alternative bei der Handhabung von wellenförmigen Werkstücken 27,28 ist in Fig. 8c dargestellt. Derartige Werkstücke 27,28 sind häufig auf Werkstückträgern sehr dicht gestapelt. In solchen Fällen ist es schwierig, mit einer Greifzange zwischen zwei benachbarten Wellen einzutauchen. Insbesondere bei langen und schweren Werkstücken 27,28 ist das Auseinanderziehen vor dem Greifen und das Zusammenschieben nach dem Ablegen der Teile sehr schwierig und zeitaufwendig. Hierzu enthält die Alternative gemäß Fig. 8c einen Lasthaken 53, der in einer Aufnahmebohrung 53a drehbar und auf einer Zahnwelle 32 gelagert ist. Ein abgewinkelter Arm 53b des Lasthakens 53 stützt sich auf der Stützbacke 33 ab. Der Lasthaken 53 faßt unter das Werkstück 27 bzw. 28. Beim Schließen der Vorrichtung bewegen sich die beiden Zahnwellen 32 aufeinander zu. Je kleiner deren Abstand zueinander ist, desto mehr wird der Lasthaken 53 über den abgewinkelten Arm 53b hochgeschwenkt. In der gezeigten Position einer Stützbacke 33 wird das Werkstück 27,28, d.h. eine Welle 54, zwischen dem Lasthaken 53 und der Stützbacke 33 eingespannt. Mit Zunahme der Größe des Abstandes "a" wächst der Schwenkweg des Lasthakens 53 und schwenkt beim Schließen der Vorrichtung hoch. In der ganz geöffneten Stellung der Vorrichtung (nicht gezeichnet) ergibt sich ein noch größerer Abstand gegenüber "a", bezogen auf den Radius "R" in die entgegengesetzte Richtung. Damit schwenkt der Lasthaken 53 vom Werkstück 27,28 weg. Zur sicheren Handhabung wird der Lasthaken 53 paarweise eingesetzt. Der Abstand beider Lasthaken 53 auf der Zahnwelle 32 ist frei wählbar.

Gemäß Fig. 8d ist ein Stellring 55 vorgesehen, der den Lasthaken 53 gegen axiales Verrutschen auf der Zahnwelle 32 sichert und gleichzeitig den Schwenkbereich des Lasthakens 53 begrenzt. Hierzu hat der Stellring 55 die gleiche Aufnahmebohrung 55a mit Zahnwellenprofil wie die Stützbacke 33. Die Fixierung auf der Zahnwelle 32 erfolgt ebenfalls mittels einer Klemmschraube 34. Der Stellring 55 weist zusätzlich zwei bogenförmige Langlöcher 55b auf. Durch die Langlöcher 55b sind Stifte 56 geführt, deren Köpfe vor dem Stellring 55 liegen und fest in Bohrungen 53c des Lasthakens 53 angebracht sind. Durch Versetzen des Stellringes 55 auf der Zahnwelle 32 kann jetzt der Schwenkbereich des Lasthakens 53 vergrößert oder verkleinert werden. Für den Fall, daß der abgewinkelte Arm 53b des Lasthakens 53 in derselben Ebene liegt wie der untere, gebogene Teil, ist der Schwenkbereich, wie in Fig. 8d dargestellt ist, eingeschränkt, so daß sich der Lasthaken 53 beim Öffnen der Vorrichtung nicht mit der Stützbacke 33 verfängt. Der Lasthaken 53 kann aber auch dahingehend gestaltet sein, daß der abgewinkelte Arm 53b gegenüber dem unteren Teil des Lasthakens 53 nach hinten versetzt ist. In diesem Fall kann der Lasthaken 53 bei etwas verkürzter Zahnwelle 32 an der linken Seite so positioniert werden, daß der untere Teil des Lasthakens 53 beim Hochschwenken vor der Zahnwelle 32 (linke Seite) und der Stützbacke 33 vorbeischwenken kann.

Diese Situation ist in Fig. 8e gezeigt. Der Schwenkbereich ist entsprechend verändert. Der Stellring 55 verhindert ein Überkippen des Lasthakens 53 nach hinten. Ein solches Hochklappen des Lasthakens 53 erfolgt, wenn jetzt ein Werkstück 28,29, d.h. eine Welle 54, ganz normal mit der einen Lastauflage 31 und der anderen Lastauflage 30 aufgenommen wird. Ein solcher Vorgang ist denkbar, wenn ein Werkstück 27,28 zwar als Rohling mit dem Lasthaken 53 gegriffen und z.B. in eine Werkzeugmaschine gehoben wird, jedoch später als Fertigteil eine stark abgesetzte Welle 54 bildet. In diesem Fall werden zusätzlich weitere Stützbacken 33 beliebig auf den Zahnwellen 32 positioniert. Nach dem Ablegen der stark abgesetzten Welle 54 werden die Lasthaken 53 dann zum Zusammenschieben der Teile auf dem Werkstückträger verwendet.

Anstelle einer Zahnwellenbohrung 31 a mit Zahnwelle 32 sind auch andere gegen Verdrehung sichernde Profile oder zur stufenlosen Einstellung auch runde Stangen mit geeigneten Klemmechanismen einsetzbar. Bei den beschriebenen Greifelementen 7a sind alle Teile, die das gegriffene Werkstück 27,28 bzw. 54 berühren, als Verschleißteile schnell auswechselbar. Die Werkstoffe dieser Teile sind dahingehend ausgewählt, daß auch Werkstücke 27,28 bzw. Wellen 54 mit hoher Oberflächengüte bei der Handhabung nicht beschädigt werden.

Die beschriebenen Greifelemente 7a können auch abgeändert eingesetzt werden, z.B. wenn extrem kurze Werkstücke 27,28 bzw. Wellen 54, Scheiben, Rollen oder Räder gehandhabt werden sollen.

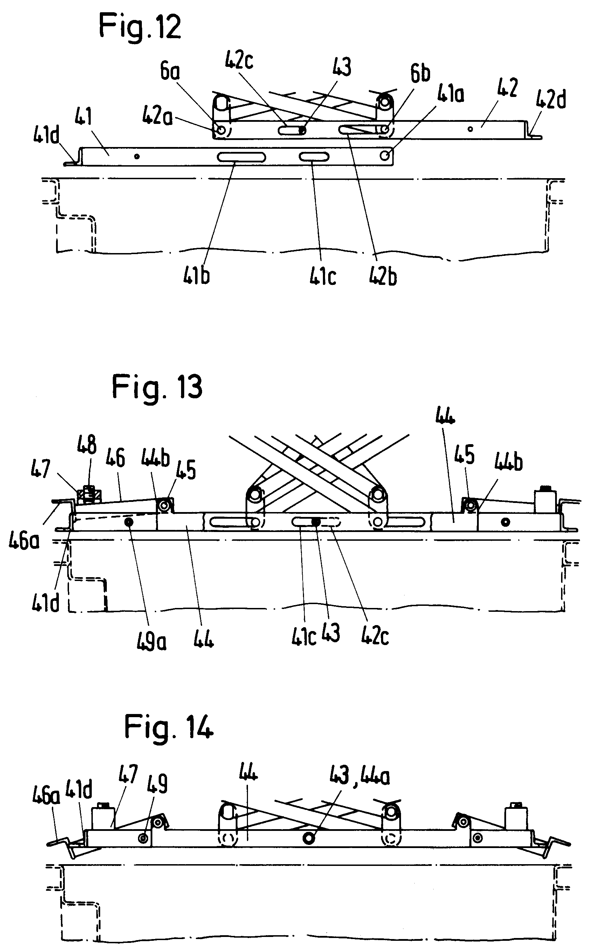

Als weitere Alternativen für scheibenförmige Werkstück sind nunmehr Greifelemente 7a gemäß den Figuren 10 und 11 vorgesehen. An dem Greifelement 35 ist um den Bolzen 36 schwenkbar das Spannprisma 37 gelagert. Das Spannprisma 37 umschließt das Greifelement 35 U-förmig. Eine Zugfeder 38 ist so am Greifelement 35 und am Spannprisma 37 befestigt, daß das Spannprisma 37 stets in eine zum Greifelement 35 deckungsgleiche Lage geschwenkt wird. In dieser Schwenklage rasten im Spannprisma 37 federnd gelagerte Kugeln 39 in die entsprechenden Bohrungen 35a im Greifelement 35. Dieser Rastmechanismus und die Zugfeder 38 bewirken, daß das Spannprisma 37 erst ab einer bestimmten Last auf seiner Spitze 37a in Richtung auf den Gleitfuß 29 zuschwenkt. Diese Lastschwelle ist so bemessen, daß das Spannprisma 37 erst schwenkt, nachdem der Verriegelungsmechanismus im Grundmodul gemäß Fig. 3 die Greifelemente 35 fixiert hat. Beim Schwenken bewegt sich ein zwischen den Greifelementen befindliches Werkstück 27,28 bzw. ein scheibenförmiges Werkstück 27;28 maximal um das Maß "s" auf den Gleitfuß 29 zu und sackt daher um das Maß "l" nach unten. Da die Last stets außerhalb der Drehachse auf der Spitze 37a des Spannprismas 37 liegt, wird auch die Kontaktfläche 37b gleichzeitig gegen das Werkstück 27,28 bzw. die Welle 54 gedrückt. Damit liegen die Greifelemente 7a immer in drei Punkten am Werkstück 27,28 bzw. der Welle 54 fest an und verhindern das Kippen bei scheibenförmigen Werkstücken. Beim Ablegen des Werkstückes 27, 28, 54 bringt die Zugfeder 38 das Spannprisma 37 stets wieder in die arretierte Ausgangslage. Der große Hub der Stäbe 4 im sog. Grundmodul bewirkt hierbei nur noch das Einstellen der Greifelemente auf viele verschiedene Werkstückgrößen, wobei das Spannen der Werkstücke 27, 28 bzw. 54 durch das schwenkbare Spannprisma 37 erzielt wird.

Wie in Fig. 11 ersichtlich ist. sind die Greifelemente 7a in der Seitenansicht sehr schmal gestaltet, damit auch Werkstücke 27, 28, die aus schmalen Scheiben bestehen, von beiden Seiten zugänglich bleiben. Das Greifprinzip läßt sich gleichermaßen auch auf Wellen 54 anwenden. Die Wellen 54 sind dabei gegen axiales Verrutschen gesichert.

Bei Wellen 54 oder scheibenförmigen Werkstücken 27, 28 werden die Greifelemente 7a immer von außen über das betreffende Werkstück geschoben. Es existieren aber auch viele Anwendungen, wo Werkstücke 27, 28 in einer darin befindlichen Bohrung oder einer beliebigen Öffnung von innen gegriffen werden müssen. Diese Fälle treten z. B. bei der Handhabung von Kunststoffbehältern auf.

Für diesen Fall ist ein Ausführungsbeispiel in den Fig. 12 bis 14 beschrieben`. Die Stäbe 4 nehmen an ihren Gelenkbolzen 6a, 6b Greifleisten 41 und 42 in Aufnahmebohrungen 41a und 42a auf. Die Greifleisten 41, 42 sind spiegelbildlich, sich überlappend angeordnet. Außerdem weisen die Greifleisten 41, 42 zur Führung am jeweils gegenüber der Aufnahme liegenden Gelenkbolzen, 6a, 6b Langlöcher 41b und 42b auf. Der Abstand dieser Langlöcher 41b, 42b zu den Bohrungen 41a bestimmt, welcher Hubbereich des Grundmoduls genutzt wird. Mit der Länge dieser Langlöcher 41b und 42b kann der Hub der Greifleisten 41, 42 eingeschränkt werden. Bei Anpassung der Vorrichtung an ein bestimmtes Werkstück 27, 28, z.B. an einen bestimmten Behälter, ist es nicht sinnvoll, den ganzen großen Hub des Grundmoduls auszunutzen. Je größer dieser Hub ist, desto größer ist auch die Bauhöhe der Vorrichtung mit gegriffenem Werkstück 27, 28. Die Greifleisten 41 und 42 sind außerdem mit Langlöchern 41c und 42c versehen. Diese sind so angeordnet und bemessen, daß durch die Überdeckung beider Langlöcher 41c und 42c in den Endlagen der Greifelemente 7a ein durch beide Löcher gesteckter Bolzen 43 stets mittig zwischen den Gelenkbolzen 6a, 6b positioniert ist. Der Bolzen 43 ragt weiterhin durch eine Bohrung 44a eines Zentrierrahmens 44. In den Endlagen der Greifelemente 7a ist der Zentrierrahmen 44 damit stets mittig ausgerichtet. Der Zentrierrahmen 44 besitzt weiterhin an den Enden jeweils eine Erhöhung 44b, die nach hinten dicker wird, auf den Greifelementen 7a aufliegt und diese nach hinten überragt. Die Erhöhungen 44b sind mit Bohrungen zur Aufnahme von Schrauben 45 versehen. Auf diesen Schrauben 45 sind hinten an den freien Enden Zentrierhebel 46 schwenkbar und gegen axiales Verschieben gesichert gelagert.

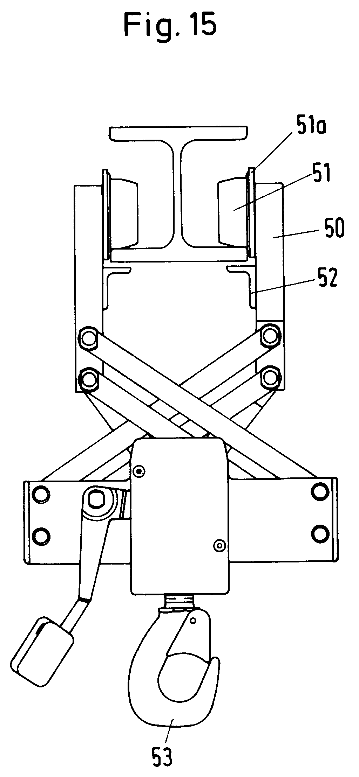

Der Schwenkbereich der Zentrierhebel 46 wird eingeschränkt, nach oben durch einen am jeweiligen Greifelement 7a befestigten Bügel 47 und eine Kugeldruckschraube 48, nach unten durch einen mittels einer Schraube 49 am Greifelement 7a befestigten Zapfen 49a. Der Zapfen 49a ragt dabei unter den Zentrierhebel 46. Die Zentrierhebel 46 weisen, wie in den Fig. 13 und 14 gezeigt ist, an den freien Enden winkelförmige Kontaktelemente 46a auf. Die Greifleisten 41 und 42 sind ebenfalls an den freien Enden mit winkelförmigen Griffstücken 41d und 42d versehen.

Im geöffneten Zustand der Vorrichtung gemäß Fig. 14 sind die Greifleisten 41 und 42 stets gegenüber den Zentrierhebeln 46 zur Vorrichtungsmitte hin verschoben. Beim Absenken der Vorrichtung auf einen Behälterrand wird diese in Längsrichtung gegenüber dem Behälter zentriert. Dabei werden die Griffstücke 41d und 42d über die winkelförmigen Kontaktelemente 46a des schwenkbaren Zentrierhebels 46 ohne anzustoßen am Behälterrand vorbeigeführt. Die Vorrichtung wird soweit abgesenkt, bis die Kontaktelemente 46a oben auf dem Behälterrand aufliegen und sich die Zentrierhebel 46 unter den Kugeldruckschrauben 48 abstützen. In diesem Zustand sind die Greifelemente 7a auch in den Behälter eingetaucht. Die glatte Unterkante der Greifleisten 41 und 42 dient dabei auch zur Kontrolle der Beladehöhe bei Stapelbehältern. Für den Fall, daß der Bedienhebel 3a am Grundmodul in Richtung zur Vorrichtungsmitte hin geschwenkt wird, verschieben sich die Greifleisten 41 und 42 beim nachfolgenden Anheben der Vorrichtung zunächst nur horizontal nach außen. Vorteilhafterweise kann an der Rückseite der Vorrichtung noch ein zweites Paar von Greifelementen 7a wie beschrieben angeordnet werden. In diesem Fall bilden die damit auch paarweise vorhandenen winkligen Griffstücke 41d und 42d eine breite Auflagefläche, die unter entsprechende Greif- oder Haltemittel des Behälters ragen. Diese Auflageflächen können nach außen hin verjüngt werden, wobei sich die Vorrichtung dann beim Auseinanderschieben der Greifleisten 41,42 über die Verjüngung der Auflageflächen in den Halte- bzw. Greifelementen des Behälters auch seitlich zentrieren. Erst wenn die Greifelemente 7a bzw. die Greifleisten 41,42 so weit verschoben sind, daß die senkrechten Schenkel der winkeligen Griffstücke 41d und 42d von innen am Behältergriff anliegen, werden diese auch angehoben. In dieser Phase legen sich jetzt die waagerechten Schenkel der Griffstücke 41d und 42d unter die Behältergriffe und heben diese an. Bei Lastaufnahme werden die Greifleisten 41 und 42 durch das Grundmodul fixiert, die Behältergriffe können dann auch bei schweren Lasten nicht auseinandergedrückt werden. In diesem Zustand werden die Behältergriffe durch die winkeligen Griffstücke 41d, 42d und die winkelförmigen Kontaktelemente dreiseitig umschlossen. Der Abstand der paarweise angeordneten Griffstücke 41d und 42d ist der Behältergriffbreite angepaßt. Damit ist auch ein Verschieben oder ein Herausfallen des Behälters selbst bei beweglichem Inhalt nicht möglich. Die Griffstücke 41d, 42d und die Zentrierhebel 46 ragen nicht über den Behälterrand. Die Zentrierhebel 46 verhindern, daß die Griffstücke 41d, 42d beim Abheben der geöffneten Vorrichtung vom Behälter unter den Behältergriffen hängenbleiben.

Eine weitere Alternative der Vorrichtung ist in Fig. 15 gezeigt. In diesem Ausführungsbeispiel werden die Greifelemente 7a durch Rollenhalter 50 und Laufrollen 51 dargestellt. Dieses Ausführungsbeispiel bedeutet, daß die Vorrichtung als Klappfahrwerk verwendet werden kann. Der große Hub der Vorrichtung ermöglicht dabei die Kombination mit unterschiedlichen Profilen, d.h. Schienenquerschnitten. Besonders vorteilhaft ist, daß sich die gegenüberliegenden Laufrollen 51 auf die Schienenbreite einstellen. Diese Wirkung ermöglicht den Einsatz von Laufrollen 51 mit einem Führungsbund 51a. Bei dieser Bauweise entfallen zusätzliche Rollen zur seitlichen Führung. Der Mittelsteg des Schienenprofils bleibt somit frei und kann auch mit zusätzlichen Verrippungen versehen sein, oder es können Installationsleitungen im Innenraum verlegt werden. Die Laufrollen 51 können den Anforderungen entsprechend z.B. auch paarweise hintereinander angeordnet werden. Höhenverstellbare Anschläge 52 verhindern ein übermäßiges Kippen bei Schrägzug.

Anstelle des Kupplungszapfens 2a (vgl. Fig. 1) wird hier ein Lasthaken 53 vorgesehen. Für den Fall, daß das Fahrwerk z.B. mit einem Flaschenzug kombiniert wird, kann bei Montagearbeiten schnell eine Förderstrecke mit den Funktionen Heben oder Senken und Bewegen in der Waagerechten eingerichtet werden.

## Patentansprüche

1. Vorrichtung zum Greifen und gewichtsabhängigen Klemmen von relativ zu einer Ortslage zu bewegenden Teilen, z. B. Werkstücken, insbesondere in Verbindung mit einem handgeführten Handhabungsgerät,
das einen Steuerschalter aufweist, wobei senkrecht angeordnete, parallel zueinander bewegbare Greifelemente an Stäben von
Hebelpaaren mit übereinander angeordneten Gelenkbolzen befestigt sind und mittig zwischen den Stäben Steuermittel angeordnet sind,
dadurch gekennzeichnet,
daß ein Tragrahmen (8) vorgesehen ist, an dem obere Paare von Gelenkbolzen (5a, 5b) für jeweils übereinanderliegende Paare von parallel zueinander schwenkbaren Stäben (4) angelenkt sind, die mittels Paaren von unteren Gelenkbolzen (6a,6b) an einem Anschlußstück (7) für austauschbare Greifelemente (7a) angelenkt sind und daß
ein Paar an je einem unteren Gelenkbolzen (6a,6b) angelenkter Streben (10) an einem mittig zwischen den Stäben (4) in einer senkrechten Langlochführung (8a) im Tragrahmen (8) bewegbaren Steuerbolzen (9) gemeinsam gelenkig befestigt ist.

2. Vorrichtung nach Anspruch 1,
dadurch gekennzeichnet,
daß außerhalb des Tragrahmens (8) ein Schnellwechsel-Mechanismus (2) mit einem Kupplungszapfen (2a) vorgesehen ist, der in eine Aufnahme (1a) eines Steuerschalters (1) einkuppelbar ist.

3. Vorrichtung nach einem der Ansprüche 1 und 2,
dadurch gekennzeichnet,
daß an dem Tragrahmen (8) ein Handgriff (3) mit einem Bedienhebel (3a) zur Betätigung eines Verriegelungsmechanismus (12) befestigt ist.

4. Vorrichtung nach einem der Ansprüche 1 bis 3,
dadurch gekennzeichnet,
daß durch die Länge und Lage der Langlochführung (8a) der Abstand der Greifelemente (7a) zueinander in ihren Endstellungen festlegbar ist.

5. Vorrichtung nach einem der Ansprüche 1 bis 4,
dadurch gekennzeichnet,
daß die mittig zwischen den Stäben (4) angeordneten Steuermittel aus dem Verriegelungsmechanismus (12) für die Greifelemente (7a) bestehen.

6. Vorrichtung nach einem der Ansprüche 1 bis 5,
dadurch gekennzeichnet,
daß der Steuerbolzen (9) mittels des Verriegelungsmechanismus (12) in einer Vielzahl von Positionen arretierbar ist.

7. Vorrichtung nach einem der Ansprüche 1 bis 6,
dadurch gekennzeichnet,
daß der Steuerbolzen (9) derart mit einem Klotz (11) verbunden ist, daß eine geringe Bewegung des Klotzes (11) quer zur Langlochführung (8a) ermöglicht wird, wobei der Klotz (11) auf der gegenüber einer am Tragrahmen (8) angebrachten Stange (13) liegenden Seite mit einer kleinteiligen Verzahnung (11a) in Richtung der Langlochführung (8a) versehen ist und daß zu dieser Verzahnung (11a) parallel verlaufend eine gleiche Verzahnung (13b) an einer am Tragrahmen (8) angebrachten Stange (13) vorgesehen ist.

8. Vorrichtung nach einem der Ansprüche 1 bis 7,
dadurch gekennzeichnet,
daß der Klotz (11) für die Aufnahme des Steuerbolzens (9) senkrecht bzw. quer zum Verlauf der Langlochführung (8a) selbst eine Langlochführung (11a) bildet.

9. Vorrichtung nach einem der Ansprüche 1 bis 8,
dadurch gekennzeichnet,
daß in dem Klotz (11) quer zum Verlauf der Langlochführung (8a) paarweise gefederte Druckbolzen (14) angeordnet sind, um den Klotz (11) aus den Verzahnungen (11a, 13b) auszukuppeln.

10. Vorrichtung nach einem der Ansprüche 1 bis 9,
dadurch gekennzeichnet,
daß parallel zum Verlauf der Verzahnung (13b) eine ebene Gleitfläche (13a) an der Stange (13) angeordnet ist.

11. Vorrichtung nach einem der Ansprüche 1 bis 10,
dadurch gekennzeichnet,
daß ein sattelartiges Teil (15) schräg nach oben verschiebbar auf dem Tragrahmen (8) angeordnet ist und mit einem Schenkel (15a) verbunden ist, in dem schräg nach oben verlaufende Langlöcher (15b) eingearbeitet sind, durch die Führungsbolzen (16) verlaufen, die im Tragrahmen (8) befestigt sind.

12. Vorrichtung nach einem der Ansprüche 1 bis 11,
dadurch gekennzeichnet,
daß das sattelartige Teil (15) und die Schenke (15a) mittels paarweise angeordneten Zugfedern (17) bei nicht vorhandener Lasteinwirkung den Steuerbolzen (9) entriegeln.

13. Vorrichtung nach einem der Ansprüche 1 bis 12,
dadurch gekennzeichnet,
daß der Weg des sattelartigen Teils (15) mittels Tragschrauben (18) begrenzt ist.

14. Vorrichtung nach einem der Ansprüche 1 bis 13,
dadurch gekennzeichnet,
daß der Verriegelungsmechanismus (12) mittels eines Handgriffs (3) und eines Bedienhebels (3a) von Hand betätigbar ist, in der Art, daß der Bedienhebel (3a) schwenkbar um eine Drehachse (3b) am Tragrahmen (8) gelagert ist und einen Mitnehmerzapfen (3c) aufweist, der über ein Langloch (19a) eines ebenfalls am Tragrahmen (8) verschiebbar gelagerten Schiebers (19) über schräg nach oben verlaufende Langlöcher (19b) geführt ist.

15. Vorrichtung nach Anspruch 14,
dadurch gekennzeichnet,
daß der Schieber (19) mittels der Bolzen (16) gegenüber dem Tragrahmen (8) verschiebbar geführt ist.

16. Vorrichtung nach einem der Ansprüche 11 bis 14,
dadurch gekennzeichnet
daß am sattelartigen Teil (15) eine Blattfeder (20) befestigt ist, die mit einem Absatz (20a) an dem Bedienhebel (3a) anliegt.

17. Vorrichtung nach einem der Ansprüche 1 bis 16,
dadurch gekennzeichnet,
daß ein äußerer Hebelarm (3d) des Bedienhebels (3a) mittels einer gefederten Kugel (21) an der Stange (13) arretierbar ist.

18. Vorrichtung nach einem der Ansprüche 1 bis 17,
dadurch gekennzeichnet,
daß die Greifelemente (7a) entweder mit einem starren Greifprisma (22) oder mit einem selbsteinstellenden Greifprisma (22) versehen sind.

19. Vorrichtung nach Anspruch 18,
dadurch gekennzeichnet,
daß das selbsteinstellende Greifprisma (22) einen Außenteil (23) aufweist mit einer am Ende befestigten Lastauflage (24) und einem etwa gegenüberliegenden Niederhalter (25) mit einer Halterung (26), wobei die Halterung (26) verschiebbar an den Stäben (4) geführt ist und den Niederhalter (25) jeweils mittels Zapfen (25a) in Bohrungen (26a) aufnimmt.

20. Vorrichtung nach einem der Ansprüche 18 und 19,
dadurch gekennzeichnet,
daß ein Außenteil (23) einen Gleitfuß (29) aufweist, der mit einem Antirutsch-Belag (29a) versehen ist und mit einer separaten Schulter (29b) zum schnellen Öffnen beim Absenken.

21. Vorrichtung nach einem der Ansprüche 18 bis 20,
dadurch gekennzeichnet,
daß ein Außenteil (23) mit einer Zusatzlastauflage (30) versehen ist, die einen gegen das jeweilige Werkstück (27,28) gerichteten Auflagenvorsprung (30a) aufweist.

22. Vorrichtung nach einem der Ansprüche 1 bis 21,
dadurch gekennzeichnet,
daß ein Greifelement (7a) aus einem Greifarm (35) besteht, an dem um einen Bolzen (36) ein Spannprisma (37) am Ende des Greifarms (35) federnd rückschwenkbar gelagert ist.

23. Vorrichtung nach einem der Ansprüche 1 bis 22,
dadurch gekennzeichnet,
daß die Greifelemente (7a) gegenüberliegend zu den Gelenkbolzen (6a,6b) jeweils eine Zahnwellenprofilbohrung (30b) aufweisen, in denen jeweils eine Zahnwelle (32) geführt ist und daß auf der Zahnwelle (32) jeweils eine Stützbacke (33) und/oder zumindest ein Lasthaken (53) angeordnet sind.

24. Vorrichtung nach einem der Ansprüche 1 bis 23,
dadurch gekennzeichnet,
daß die Greifelemente (7a) für dicht aneinanderliegende Werkstücke (27;28) aus einem Lasthaken (53) mit einem abgewinkelten Arm (53b) bestehen und auf der Zahnwelle (32) schwenkbar gelagert sind, wobei Mittel für die Begrenzung der Schwenkbewegung und Mittel gegen eine Axialbewegung vorgesehen sind.

25. Vorrichtung nach einem der Ansprüche 1 bis 24,
dadurch gekennzeichnet,
daß die Greifelemente (7a) aus zueinander in einer Ebene verstellbaren Greifleisten (41,42) bestehen, die beide über Gelenkbolzen (6a,6b) mit den Anschlußstücken (7) verbunden sind und einen Zentrierrahmen (44) aufnehmen.

26. Vorrichtung nach einem der Ansprüche 1 bis 25,
dadurch gekennzeichnet,
daß an den Endbereichen des Zentrierrahmens (44) jeweils Zentrierhebel (46) schwenkbar gelagert und gegen axiales Verschieben gesichert sind.

27. Vorrichtung nach einem der Ansprüche 1 bis 26,
dadurch gekennzeichnet,
daß an den Anschlußstücken (7) Rollenhalter (50) mit drehgelagerten Laufrollen (51) befestigt sind.
